# FASCICULE DE BREVET EUROPEEN

(11) **EP 0 708 914 B1**
(45) Date de publication et mention de la délivrance du brevet: **01.10.1997**
(21) Numéro de dépôt: 94921689.9
(22) Date de dépôt: 06.07.1994
(51) Int. Cl.: G01F 1/32

(54) **OSCILLATEUR FLUIDIQUE A LARGE GAMME DE DEBITS ET COMPTEUR DE FLUIDE COMPORTANT UN TEL OSCILLATEUR**
FLUIDISCHER OSZILLATOR FÜR EINEN BREITEN DURCHFLUSSBEREICH UND EIN DURCHFLUSSMESER DER EINEN SOLCHEN OSZILLATOR ENTHÄLT
FLUIDIC OSCILLATOR HAVING A WIDE RANGE OF FLOW RATES, AND FLUID METER COMPRISING SAME

(30) Priorité: 13.07.1993 FR 9308592
(43) Date de publication de la demande: 01.05.1996
(73) Titulaire: SCHLUMBERGER INDUSTRIES, F-92120 Montrouge (FR)
(72) Inventeur: HUANG, Bao, Tuan, F-92160 Antony (FR)
(86) Numéro de dépôt international: FR9400831
(87) Numéro de publication internationale: WO9502803

(56) Documents cités:
- EP-A- 0 269 384
- EP-A- 0 524 852
- PATENT ABSTRACTS OF JAPAN vol. 13, no. 587 (P-983) (3935) 25 Décembre 1989 & JP,A,01 250 725 (OSAKA GAS) 5 Octobre 1989
- JOURNAL OF PHYSICS E. SCIENTIFIC INSTRUMENTS, vol.21, no.10, Octobre 1988, BRISTOL GB pages 977 - 989 R.F. BOUCHER, E.A. 'LOW REYNOLDS NUMBER FLUIDIC FLOWMETERING'
- JOURNAL OF PHYSICS E. SCIENTIFIC INSTRUMENTS, vol.13, no.4, Avril 1980, BRISTOL GB pages 433 - 436 P.H. WRIGHT 'THE COANDA METER - A FLUIDIC DIGITAL GAS FLOWMETER'

## Description

La présente invention est relative à un oscillateur fluidique et à un compteur de fluide liquide ou gazeux, en écoulement, comportant un tel oscillateur fluidique.

Depuis plusieurs années, apparaissent sur le marché des compteurs comportant des oscillateurs fluidiques et se différenciant des compteurs traditionnels, à turbine ou à membrane, par le fait que leur fonctionnement ne fait intervenir aucune pièce en mouvement susceptible de s'user au cours du temps.
Ces oscillateurs fluidiques peuvent être de petites dimensions, d'architecture très simple et présentent une très bonne fiabilité.
En outre, de tels oscillateurs délivrent un signal en fréquence qui peut être aisément converti en un signal numérique ce qui est particulièrement avantageux pour la lecture des compteurs à distance.

Un oscillateur fluidique symétrique par rapport à un plan de symétrie longitudinal est décrit dans la demande de brevet français n° 92 05 301 déposée par la Demanderesse et comprend une entrée de fluide qui est munie d'une ouverture d'entrée de largeur d . Une telle ouverture d'entrée permet de former un jet de fluide bidimensionnel oscillant.
L'oscillateur fluidique comprend une chambre dite d'oscillation dans laquelle peut osciller le jet de fluide bidimensionnel. Cette chambre d'oscillation présente des parois situées de part et d'autre du plan de symétrie longitudinal et est reliée par une première extrémité à l'ouverture d'entrée de fluide et, par une seconde extrémité opposée à la première, à une ouverture de sortie de fluide.
Les ouvertures d'entrée et de sortie de fluide sont toutes deux alignées suivant le plan de symétrie longitudinal.
L'oscillateur fluidique comprend également un obstacle logé dans la chambre d'oscillation ménageant ainsi avec les parois de celles-ci des passages latéraux symétriques par rapport au plan de symétrie longitudinal pour permettre au fluide de s'écouler vers l'aval de l'oscillateur fluidique.
L'obstacle possède une partie frontale et une partie arrière, la partie frontale étant pourvue d'une cavité disposée en regard de l'ouverture d'entrée de fluide. La partie arrière est située en regard de l'ouverture de sortie de fluide et possède une extrémité qui définit avec ladite ouverture de sortie de fluide un espace libre dans lequel débouchent les passages pour l'écoulement du fluide vers l'aval de l'oscillateur fluidique.

Ainsi, le jet de fluide pénètre dans la chambre d'oscillation par l'ouverture d'entrée et balaye les parois de la cavité, ce qui a pour effet de former de part et d'autre dudit jet de fluide et en regard de la partie frontale des tourbillons, ces tourbillons étant alternativement forts et faibles, en opposition de phase et en relation avec l'oscillation du jet.

La mesure de débit est par exemple effectuée en détectant le balayage du fond de la cavité par le jet au cours de son oscillation, la fréquence d'oscillation du jet étant proportionnelle au débit du fluide.

L'écoulement de fluide est alors alternativement évacué vers l'aval de l'oscillateur fluidique, c'est à dire plus précisément vers l'espace libre et vers l'ouverture de sortie par les passages disposés de part et d'autre de l'obstacle.

On définit alors un facteur, appelé facteur K, qui est égal au rapport de la fréquence d'oscillation du jet par le débit de fluide Q et l'on considère, par exemple, qu'un oscillateur fluidique utilisé dans un compteur à gaz commercial est linéaire dans une gamme de débits allant de 0,6 à 40 m³/h lorsque les variations relatives du facteur K sont inférieures à ± 1,5%.

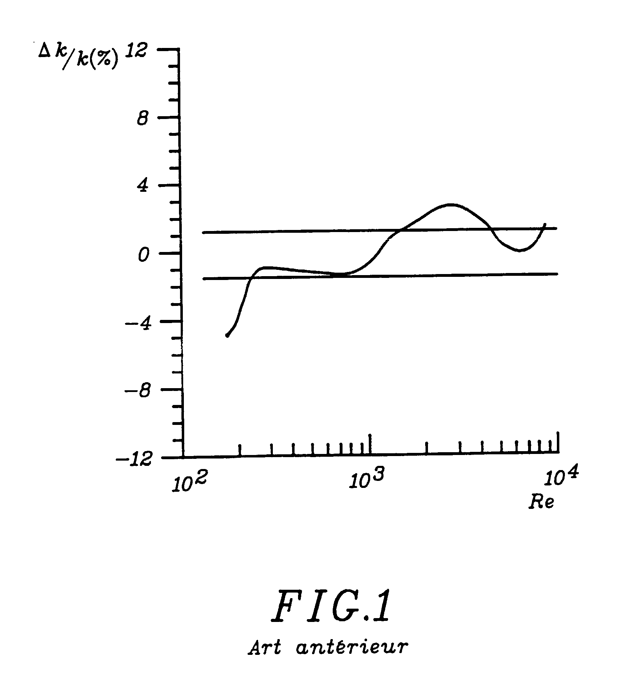

Pour chaque oscillateur fluidique on apprécie sa linéarité en représentant, comme sur la Fig. 1, par une courbe dite de calibration les variations relatives du facteur K en fonction du nombre de Reynolds Re (Re étant égal à la vitesse du fluide au droit de l'ouverture d'entrée de la chambre d'oscillation multipliée par la largeur de cette ouverture et divisée par la viscosité cinématique dudit fluide).
La figure 1 montre qu'à partir d'une certaine valeur du nombre de Reynolds Re, la courbe de calibration n'est plus inscrite dans la plage correspondant aux variations relatives du facteur K inférieures à ± 1,5% ce qui traduit une non linéarité de l'oscillateur fluidique en question. A chaque demi-période du phénomène oscillatoire, l'écoulement de fluide qui a emprunté l'un des passages latéraux débouche dans l'espace libre et se dirige vers la conduite d'évacuation.
Or, l'écoulement de fluide crée une augmentation de pression dans l'autre passage, se propageant vers l'amont en direction des tourbillons, perturbant ainsi l'oscillation desdits tourbillons et donc l'oscillation du jet. Ceci explique l'écart constaté sur la courbe de calibration de la Fig. 1 et montre l'influence de l'écoulement aval du fluide sur la linéarité de l'oscillateur fluidique. Cette influence est d'autant plus marquée que le nombre de Reynolds est élevé.
On connaît d'après l'article "Journal of Physics E. Scientific Instruments, vol. 21, no. 10, Octobre 1988, pp. 977-989" un oscillateur fluidique symétrique par rapport à un plan de symétrie longitudinal et qui comprend un obstacle de petites dimensions disposé dans une chambre d'oscillation et en vis à vis de l'ouverture d'entrée qui sert à former un jet de fluide bidimensionnel oscillant transversalement par rapport audit plan, de part et d'autre duquel des tourbillons se développent alternativement en relation avec l'oscillation du jet, ainsi que des éléments formant saillie dans la chambre d'oscillation en aval dudit obstable. Un tel oscillateur fluidique n'est cependant pas satisfaisant étant donné qu'il présente des écarts de linéarité sur sa courbe de calibration qui sont inacceptables.
La présente invention vise à remédier à cet inconvénient en proposant un oscillateur fluidique et un compteur de fluide comportant un tel oscillateur fluidique de conceptions particulièrement simples et dont la linéarité est améliorée, notamment aux débits de fluide élevés.
La présente invention a ainsi pour objet un oscillateur fluidique qui est symétrique par rapport à un plan de symétrie longitudinal P et qui comprend: des moyens pour engendrer un jet de fluide bidimensionnel oscillant transversalement par rapport audit plan de symétrie longitudinal P, des moyens pour former de part et d'autre dudit jet des tourbillons et pour permettre l'écoulement du fluide vers l'aval de l'oscillateur fluidique, lesdits tourbillons étant influencés par l'écoulement aval du fluide.
L'oscillateur fluidique selon l'invention comporte des moyens pour limiter l'influence de l'écoulement aval du fluide sur l'oscillation des tourbillons. L'invention a plus particulièrement pour objet un oscillateur fluidique qui comprend:
- une entrée de fluide comportant une ouverture d'entrée de largeur d, apte à former un jet de fluide bidimensionnel oscillant,
- une chambre d'oscillation raccordée, par une de ses extrémités, à l'ouverture d'entrée de fluide et, par l'extrémité opposée, à une ouverture de sortie de fluide, les deux ouvertures étant alignées suivant le plan de symétrie longitudinal P, et ayant des parois situées de part et d'autre dudit plan P,
- un obstacle disposé dans ladite chambre d'oscillation et formant avec les parois de celle-ci des passages pour l'écoulement du fluide vers l'aval de l'oscillateur fluidique, ledit obstacle présentant une partie frontale dans laquelle est pratiquée une cavité en regard de l'ouverture d'entrée de fluide et une partie arrière disposée en regard de l'ouverture de sortie de fluide et définissant par son extrémité avec ladite ouverture de sortie un espace libre dans lequel débouchent les passages. Les moyens pour limiter l'influence de l'écoulement aval du fluide sur l'oscillation des tourbillons comprennent un élément longitudinal qui est disposé dans l'alignement des ouvertures d'entrée et de sortie de fluide et au moins partiellement dans l'espace libre précédemment défini de manière à séparer partiellement celui-ci en deux zones identiques, en ménageant entre lesdites zones au moins un canal de communication pour le fluide, ledit canal de communication ayant une section de passage médiane contenue dans le plan de symétrie longitudinal P. Avantageusement, l'élément longitudinal présente une extrémité dite amont et une autre extrémité opposée dite aval qui est située à une distance de l'ouverture d'entrée de fluide comprise entre 8,5 d et 16,2 d

Selon un premier mode de réalisation de l'invention, le canal de communication est ménagé entre l'extrémité de la partie arrière de l'obstacle et l'extrémité amont de l'élément longitudinal, ces extrémités constituant les bords dudit canal de communication.
Selon d'autres caractéristiques de l'invention:
- l'élément longitudinal a une forme générale en T dont la barre horizontale constitue un des bords du canal de communication.
- l'élément longitudinal a une forme présentant des faces latérales qui s'étendent à partir de l'extrémité amont jusqu'à l'extrémité aval en formant chacune avec le plan de symétrie longitudinal P un même angle continûment décroissant,
- l'élément longitudinal a une forme triangulaire dont la pointe constitue l'extrémité aval.
Dans ce mode de réalisation de l'invention, le canal de communication a une section de passage de forme sensiblement rectangulaire orientée perpendiculairement à la direction d'écoulement.
Selon un second mode de réalisation de l'invention, l'élément longitudinal forme une cloison qui s'étend depuis son extrémité amont, confondue avec l'extrémité de la partie arrière de l'obstacle, jusqu'à son extrémité aval, le canal de communication étant aménagé dans ladite cloison.
Selon d'autres caractéristiques liées à ce mode de réalisation,
- le canal de communication a une section de passage de forme sensiblement rectangulaire orientée perpendiculairement à la direction d'écoulement du fluide,
- le canal de communication a une section de passage de forme sensiblement elliptique orientée perpendiculairement à la direction d'écoulement du fluide,
- le canal de communication a une section de passage de forme oblongue orientée perpendiculairement à la direction d'écoulement du fluide.
Selon encore d'autres caractéristiques de l'invention:
- le canal de communication a une dimension longitudinale correspondant à sa largeur qui est comprise entre 0,5 d et 5 d.
- la distance entre l'ouverture d'entrée de fluide et le plan transversal médian du canal de communication est comprise entre 7,5 d et 15 d.
- le canal de communication a une dimension transversale qui est comprise entre 0,5 d et 5 d.

La présente invention a également pour objet un compteur de fluide liquide ou gazeux, en écoulement, comportant un oscillateur fluidique conforme à au moins une des caractéristiques précédemment exposées.
D'autres caractéristiques et avantages de l'invention ressortiront de la description qui va suivre, donnée à titre d'exemple illustratif et non limitatif, faite en référence aux dessins annexés sur lesquels:
- la Figure 1 déjà décrite représente les variations relatives du facteur K en fonction du nombre de Reynolds Re d'un oscillateur fluidique selon l'art antérieur,
- la Figure 2 est une vue schématique de dessus d'un oscillateur fluidique selon un premier mode de réalisation de l'invention,
- la Figure 3 est une vue schématique partielle en perspective de l'oscillateur fluidique de la Figure 2,
- la Figure 4 est une vue schématique partielle de dessus représentant une variante de réalisation de la partie arrière de l'oscillateur fluidique de la Figure 2,
- la Figure 5 est une vue schématique en perspective de la variante de réalisation de la Figure 4,
- la Figure 6 est une vue schématique partielle de dessus représentant une autre variante de réalisation de la partie arrière de l'oscillateur fluidique de la Figure 2,
- la Figure 7 est une vue schématique en perspective de la variante de réalisation de la Figure 6,
- la Figure 8 est une vue schématique partielle en perspective de la partie arrière d'un oscillateur fluidique selon un second mode de réalisation de l'invention, la partie frontale dudit oscillateur fluidique étant identique à celle de la Figure 2,
- les Figures 9 et 10 sont des vues schématiques partielles en perspective représentant des variantes de réalisation de la partie arrière de l'oscillateur fluidique de la Figure 8,
- les Figures 11 et 12 sont des vues schématiques partielles de dessus de la partie frontale d'un oscillateur fluidique selon l'invention en fonctionnement en régime de transition à différents instants, et
- la Figure 13 représente les variations relatives du facteur K en fonction du nombre de Reynolds Re d'un oscillateur fluidique selon l'invention (trait plein) et d'un oscillateur fluidique selon l'art antérieur (trait en pointillé).

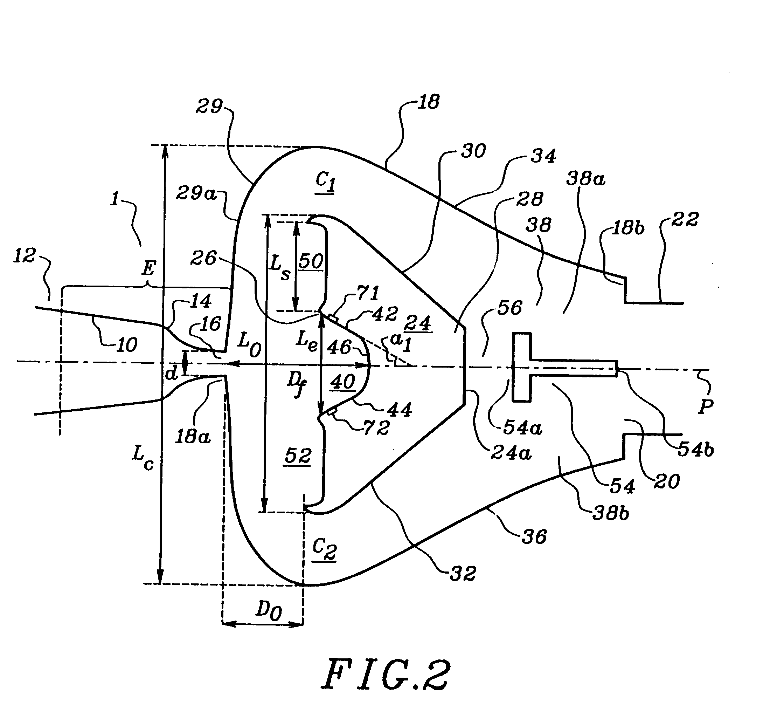

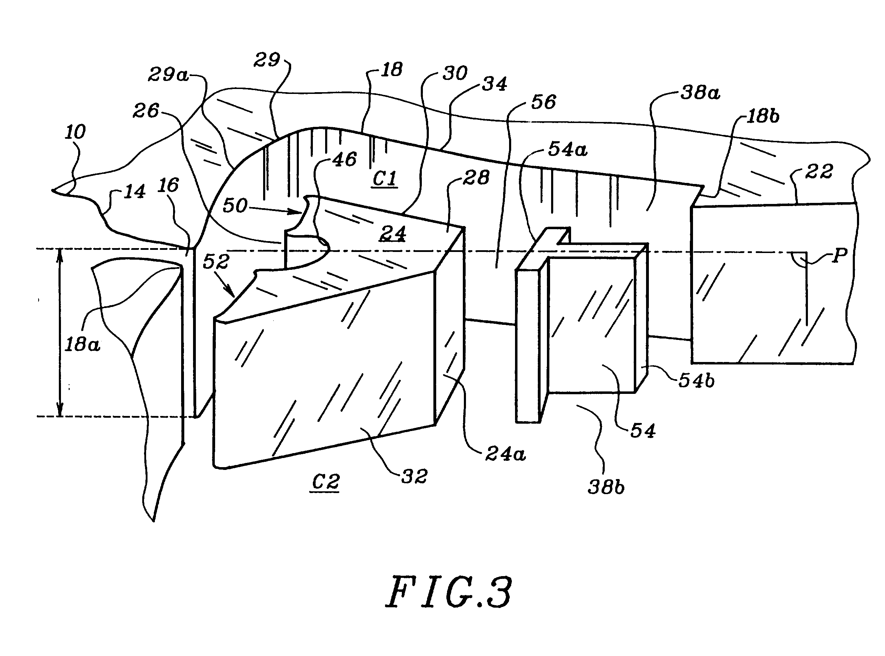

Comme représenté aux Figures 2 à 10 et désigné dans son ensemble par la référence 1, l'oscillateur fluidique selon l'invention possède un plan de symétrie longitudinal P.
Le fluide en écoulement dans cet oscillateur fluidique est un gaz mais il peut également s'agir d'un liquide.
Ainsi que représenté sur la Figure 2, le fluide pénètre dans l'oscillateur fluidique par une entrée E constituée d'une chambre de tranquilisation 10 raccordée à une canalisation d'arrivée de fluide 12 et d'un convergent 14 terminé par une ouverture d'entrée rectangulaire 16.
Le convergent 14 permet d'accroître la vitesse du fluide et a également pour fonction de former un jet bidimensionnel oscillant.
A cet effet, l'ouverture d'entrée 16 qui est raccordée à une des extrémités 18a d'une chambre d'oscillation 18 présente une forme rectangulaire de hauteur h, représentée sur la Figure 3, et de largeur d, le rapport de ces deux dimensions respectant les conditions de bidimensionnalité connues de l'homme de l'art.
D'une manière générale, le rapport h/d doit être de l'ordre de 6 ou même supérieur à 6.
La largeur d constituera l'unité de référence dans la suite de la description et compte tenu du fait que les phénomènes d'écoulement sont bidimensionnels les différents éléments constitutifs de l'oscillateur fluidique selon la présente invention ne seront décrits que dans un plan parallèle au plan d'oscillation du jet de fluide.
La chambre d'oscillation 18 dans laquelle pénètre le jet de fluide bidimensionnel oscillant est raccordée à une ouverture de sortie de fluide 20 par son extrémité opposée 18b à celle 18a qui est raccordée à l'ouverture d'entrée de fluide 16.
L'ouverture de sortie de fluide 20 correspond à l'ouverture d'entrée d'une conduite d'évacuation du fluide 22.
Tel que représenté sur la Figure 2, les ouvertures d'entrée et de sortie de fluide 16, 20 sont alignées suivant le plan de symétrie longitudinal P et la chambre d'oscillation 18 est symétrique par rapport à ce plan.
Un obstacle 24 symétrique par rapport au plan de symétrie longitudinal P est disposé dans la chambre d'oscillation 18 et présente, d'une part, une partie frontale 26 située à une distance Do de l'ouverture d'entrée de fluide 16 comprise dans une gamme allant de 1 d à 10 d par exemple égale à 2,5 d et, d'autre part, une partie arrière 28 située en regard de l'ouverture de sortie de fluide 20, ces deux parties étant sensiblement perpendiculaires audit plan de symétrie longitudinal P.
La partie frontale 26 de l'obstacle 24 possède une largeur Lo comprise dans une gamme allant de 5 d à 30 d.
Par exemple, cette largeur peut-être égale à 12 d.
La chambre d'oscillation 18 possède une plus grande largeur Lc au niveau de laquelle est placée la partie frontale 26 de l'obstacle; Lc peut-être comprise dans une gamme allant de 10 d à 50 d. Par exemple, Lc peut-être égale à 20 d.
Sur la Figure 2, on distingue deux passages symétriques C1, C2 d'écoulement de fluide disposés de part et d'autre du plan de symétrie longitudinal P. Le passage C1 situé au dessus du plan de symétrie longitudinal P sur la Figure 2 est formé, sur une première portion de longueur, entre la partie frontale 26 de l'obstacle 24 et une partie 29a d'une paroi dite frontale 29 de la chambre d'oscillation 18 et, sur une seconde portion de longueur, entre une 30 des parois latérales 30, 32 de l'obstacle 24 et une 34 des parois latérales 34, 36 de ladite chambre d'oscillation.
Le passage C2 situé au dessous du plan de symétrie longitudinal P sur la Figure 2 est formé, sur une première portion de longueur, entre la partie frontale 26 de l'obstacle 24 et une partie 29b de la paroi frontale 29 de la chambre d'oscillation 18 et, sur une seconde portion de longueur, entre l'autre paroi latérale 32 de l'obstacle 24 et l'autre paroi latérale 36 de ladite chambre d'oscillation.

Ces passages C1, C2 débouchent dans un espace libre 38 situé en aval de l'obstacle 24 par rapport au sens d'écoulement du fluide et qui est défini entre l'extrémité 24a de la partie arrière 28 de l'obstacle 24 et l'ouverture de sortie de fluide 20.
La largeur de ces passages est sensiblement égale à l'écart Lc-Lo. Une cavité dite principale 40 est pratiquée dans la partie frontale 26 de l'obstacle 24 et en regard de l'ouverture d'entrée 16.
Cette cavité principale 40 présente une entrée de largeur Le comprise dans une gamme allant de 2 d à 20 d, par exemple, égale à 5 d, et possède des parois inclinées 42, 44 formant sensiblement un V dont les branches vont en s'évasant vers l'extérieur de la cavité 40.
Ces parois 42, 44 présentent un angle d'ouverture al par rapport au plan de symétrie P, compris dans une gamme allant de 0° à 80°. Avantageusement, al est compris dans une gamme allant de 10° à 45°. Il peut-être par exemple égal à 45°.
Comme représenté sur la Figure 2, les parois latérales 42, 44 de la cavité principale 40 se referment sur un fond 46 sensiblement parabolique. Le fond de la cavité principale 40 est disposé en regard de l'ouverture d'entrée 16 à une distance Df de celle ci, Df étant comprise dans une gamme allant de 3 d à 15 d.
Df peut par exemple être égale à 6 d.
Le jet ayant pénétré dans la chambre d'oscillation 18 vient frapper les parois et le fond de la cavité principale 40 dans un mouvement de balayage alternatif.
L'oscillation du jet bidimensionnel dans la chambre d'oscillation 18 s'accompagne de la formation de tourbillons situés de part et d'autre du jet, alternativement forts et faibles en opposition de phase et en relation avec l'oscillation. Ces tourbillons sont localisés principalement dans l'espace situé entre la partie frontale 26 de l'obstacle 24 et les parties 29a et 29b de la paroi dite frontale 29 de la chambre 18 dans laquelle est raccordée l'ouverture d'entrée 16.

Sur la Figure 2, deux cavités dites secondaires 50 et 52 sont pratiquées dans la partie frontale 26 de l'obstacle 24, symétriquement par rapport au plan de symétrie P, de part et d'autre de la cavité principale 40. Les cavités secondaires 50 et 52 étant respectivement situées en regard des parties 29a et 29b de la paroi frontale 29 de la chambre d'oscillation 18.
Les cavités secondaires 50 et 52 présentent une forme contenue dans un quadrilatère dont un côté est ouvert pour former une entrée. La forme des cavités secondaires est donc tangente à trois côtés du quadrilatère.
Les inclinaisons des parois latérales par rapport à un plan parallèle au plan de symétrie P peuvent prendre des valeurs angulaires importantes sans que le fonctionnement du dispositif en soit profondément modifié.

Sur la Figure 2, le fond des cavités secondaires 50, 52 est perpendiculaire au plan de symétrie P, mais il peut également présenter un angle d'ouverture avec ce plan, cet angle pouvant prendre des valeurs allant jusqu'à + 45°.
L'entrée de chaque cavité secondaire présente une largeur Ls comprise dans une gamme allant de 1 d à 15 d et par exemple égale à 3,75 d.

Ces cavités secondaires 50, 52 ont pour fonction de rendre l'extension radiale des tourbillons dépendante du régime d'écoulement du jet. Par extension radiale, on comprendra la distance entre le centre du tourbillon considéré et son périmètre.
De telles cavités peuvent, tout en remplissant cette fonction adopter des géométries différentes.

En régime turbulent, quelle que soit la position de l'impact du jet de fluide dans la cavité principale 40, un tourbillon secondaire se forme dans chaque cavité secondaire 50, 52. Ces tourbillons secondaires sont suffisamment intenses pour que l'oscillateur fluidique fonctionne globalement de la même manière qu'un oscillateur sans cavité secondaire.

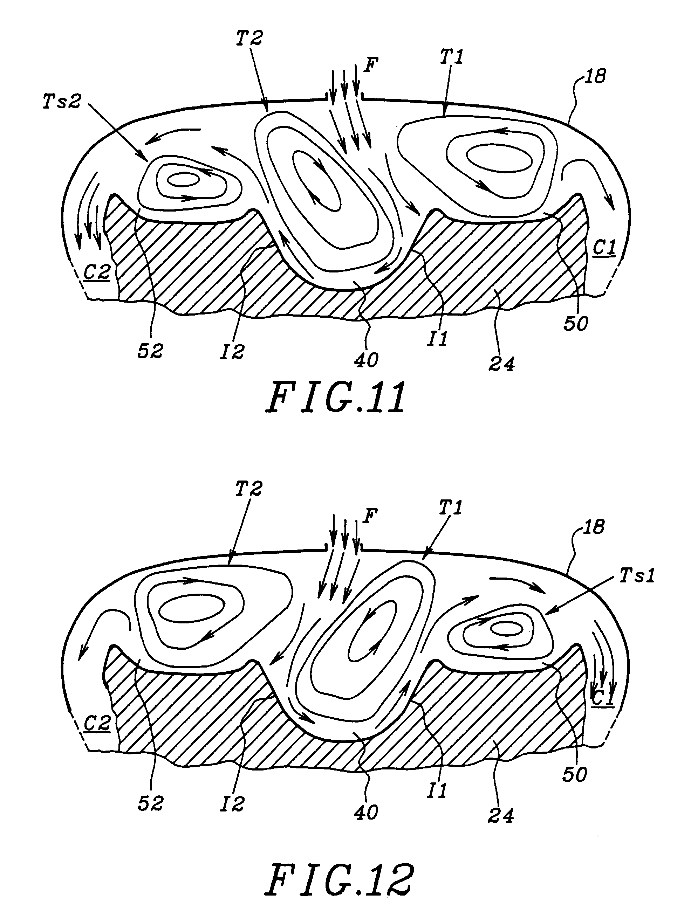

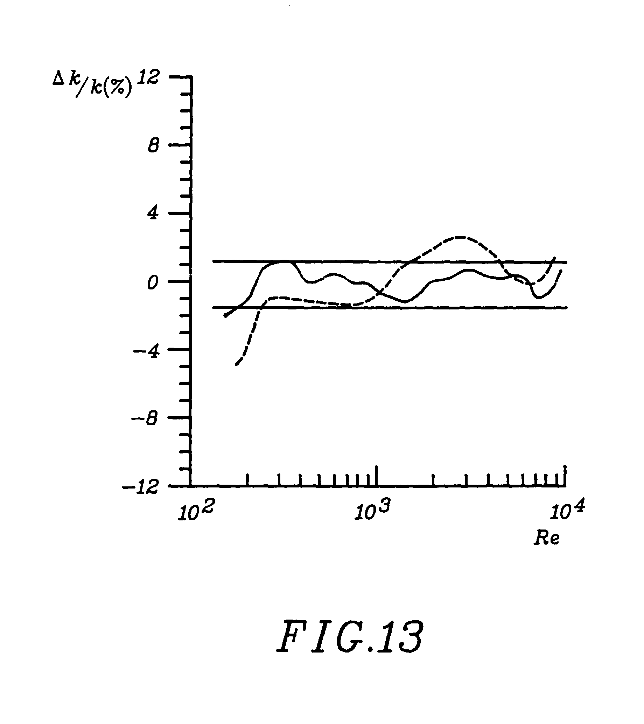

Les cavités secondaires 50, 52 sont particulièrement utiles en régime laminaire et en régime de transition en permettant d'améliorer la linéarité de l'oscillateur fluidique.
Ainsi, en régime de transition, tel que représenté aux Figures 11 et 12, l'impact du jet de fluide F balaye la cavité principale 26 entre les points extrêmes I1 et I2 et l'oscillation s'accompagne de la formation des tourbillons principaux T1 et T2 localisés entre la partie frontale de l'obstacle 24 et la paroi frontale 29 de la chambre d'oscillation 18. Sur la figure 11, l'impact du jet atteint le point I1, le tourbillon T1 est alors concentré et fort tandis que le tourbillon T2 est faible. Le jet fluide s'échappe principalement par le passage C2 vers l'aval de l'obstacle 24 en direction de l'espace libre 38.
En régime turbulent, les deux cavités secondaires 50, 52 sont remplies par des tourbillons secondaires Ts1 et Ts2 alternativement forts et faibles en opposition de phase avec les tourbillons principaux. Mais plus le débit diminue, plus l'intensité ou la concentration de ces tourbillons secondaires diminue.
Il en résulte que le tourbillon principal fort, en l'occurrence T1 sur la figure 11, voit son extension radiale augmenter, de sorte que lorsqu'on diminue le débit, il occupe progressivement la cavité secondaire 50 au détriment du tourbillon secondaire Ts1 qui finit par disparaître totalement.
Par contre, le tourbillon secondaire Ts2 créé par l'échappement du jet de fluide est toujours présent dans la cavité secondaire 52.
Sur la figure 12, l'impact du jet fluide est situé en I2; c'est alors le tourbillon T2 qui présente une extension radiale augmentée, le tourbillon secondaire Ts2 disparaissant totalement lorsque le débit est suffisamment abaissé. Les tourbillons principaux lorsqu'ils sont concentrés et forts possèdent une extension radiale supérieure en régime de transition à celle qu'ils possèdent en régime turbulent (puisque dans ce dernier régime les cavités secondaires sont toutes les deux occupées par des tourbillons secondaires, l'espace disponible au développement des tourbillons principaux est réduit). La fréquence d'oscillation est d'autant plus faible que l'extension radiale des tourbillons principaux forts est grande.

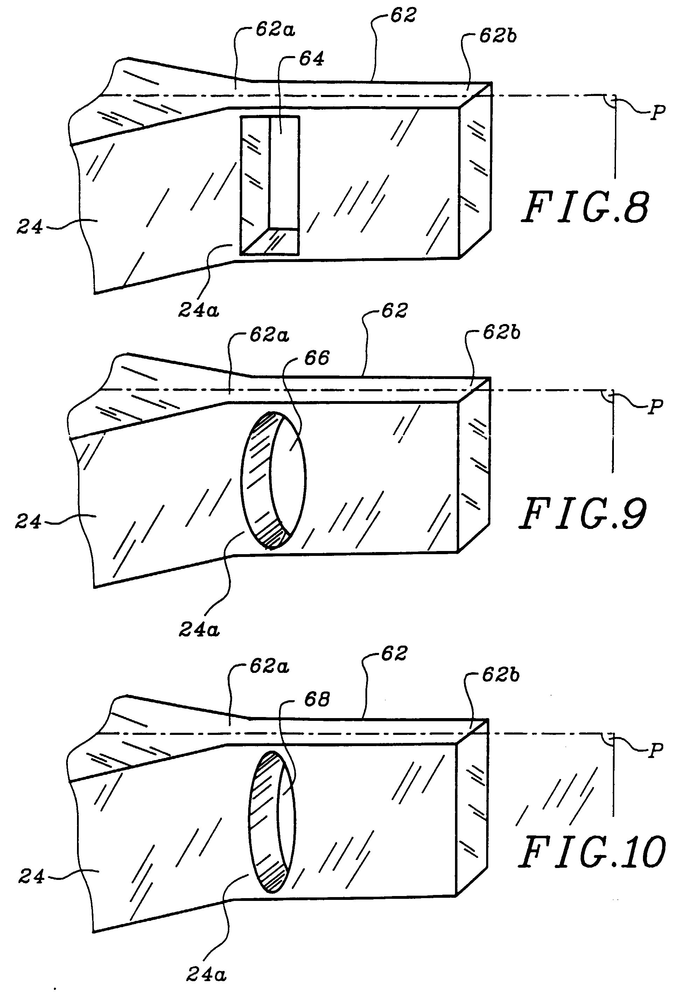

Cependant, à chaque demi-période du phénomène oscillant, et pour tous les régimes d'écoulement, le fluide, après avoir emprunté l'un des passages d'écoulement C1, C2, s'écoule en aval de l'obstacle 24 dans l'espace libre 38, et crée dans l'autre passage une augmentation de pression qui se propage vers l'amont de la chambre d'oscillation 18 et influence l'oscillation des tourbillons.
Cette influence est d'autant plus prononcée que le régime d'écoulement est turbulent.
A cet effet, l'oscillateur fluidique 1 selon l'invention comporte des moyens pour limiter l'influence de l'écoulement aval du fluide sur l'oscillation des tourbillons.
La Demanderesse s'est d'ailleurs aperçue que cette influence ne devait pas être totalement supprimée.
Ces moyens comprennent un élément longitudinal repéré par les références 54, 58, 60 sur les figures 2 à 7 et par la référence 62 sur les
Figures 8 à 10 qui est disposé dans l'alignement des ouvertures d'entrée et de sortie de fluide 16, 20 et symétrique par rapport au plan P.
L'élément longitudinal 54, 58, 60, 62 est situé au moins partiellement dans l'espace libre 38, c'est à dire qu'il peut en principe être partiellement engagé dans la conduite d'évacuation du fluide 22. Toutefois, il est particulièrement avantageux de limiter son emplacement à la chambre d'oscillation 18 étant donné qu'un compteur de fluide comportant un tel oscillateur forme une unité compacte qu'il est aisé d'installer entre les conduites d'arrivée et d'évacuation de fluide 12, 22.
L'élément longitudinal 54, 58, 60, 62 sépare partiellement l'espace libre en deux zones identiques 38a et 38b situées de part et d'autre du plan de symétrie longitudinal P et dans chacune desquelles débouche un des passages C1, C2.
Les moyens pour limiter l'influence de l'écoulement aval du fluide sur l'oscillation des tourbillons comprennent également un canal de communication repéré par la référence 56 sur les Figures 2 à 7 et par les références 64, 66, 68 sur les Figures 8 à 10 qui est ainsi ménagé entre les zones 38a et 38b de l'espace libre 38 mais il est également possible d'envisager plusieurs canaux de communication. Un tel canal de communication 56, 64, 66, 68 possède une section de passage médiane pour le fluide qui est contenue dans le plan de symétrie longitudinal P.
L'élément longitudinal 54, 58, 60, 62 présente deux extrémités opposées 54a et 54b, 58a et 58b, 60a et 60b, 62a et 62b alignées suivant le plan de symétrie P, l'une 54a, 58a, 60a, 62a étant appelée amont et l'autre 54b, 58b, 60b, 62b étant appelée aval. L'extrémité aval 54b, 58b, 60b, 62b est située à une distance de l'ouverture d'entrée de fluide 16 comprise entre 8,5 d et 16,2 d et par exemple égale à 16,2 d. Selon un premier mode de réalisation de l'invention représenté aux
Figures 2 et 3, le canal de communication 56 est ménagé entre l'extrémité 24a de la partie arrière 28 de l'obstacle 24 et l'extrémité amont 54a de l'élément longitudinal 54. Ces deux extrémités 24a et 54a alignées suivant le plan de symétrie P définissent une dimension longitudinale du canal de communication 56, la largeur, et constituent les bords de celui-ci.
L'autre dimension longitudinale du canal de communication 56, la hauteur, est la même que celles de l'obstacle 24 et de l'ouverture d'entrée de fluide 16, c'est à dire h.
Comme représenté Figure 3, l'élément longitudinal 54 vue en coupe dans le plan d'oscillation du jet a une forme générale en T qui est couchée par rapport à la direction d'écoulement du fluide et la barre horizontale du T correspond à l'extrémité amont 54a dudit élément longitudinal 54, constituant par là même un des bords du canal de communication.
Cette forme est avantageuse de par la simplicité de sa conception. La forme de la section de passage du canal de communication 56 est sensiblement rectangulaire et possède une orientation perpendiculaire à la direction d'écoulement du fluide.
Le canal de communication 56 a une largeur comprise entre 0,5 d et 5 d et est par exemple égale à 1,8 d.
En effet, l'extrémité amont 54a de l'élément longitudinal ne doit pas être trop éloignée de l'extrémité 24a de la partie arrière 28 de l'obstacle 24 afin que l'écoulement de fluide qui provient de l'un des passages C1, C2 ne puisse basculer d'une zone à l'autre et donc perturber la formation des tourbillons.
Cette extrémité amont 54a ne doit pas non plus être trop proche de l'obstacle 24 pour ne pas supprimer le phénomène d'oscillation du jet de fluide.
La distance entre l'ouverture d'entrée de fluide 16 et le plan transversal médian du canal de communication 56 qui est perpendiculaire au plan de symétrie P et à la direction d'écoulement du fluide est comprise entre 7,5 d et 15 d et est par exemple égale à 12,1 d.
En outre, le canal de communication 56 a une dimension transversale correspondant à sa profondeur qui est comprise entre 0,5 d et 5 d et est par exemple égale à 2,4 d.
Il est avantageux de disposer d'un élément longitudinal 54 qui ait une extrémité amont 54a de dimension transversale suffisamment grande pour éviter que l'écoulement de fluide ne bascule d'une zone à l'autre.

Avantageusement, l'élément longitudinal 54 a une forme profilée qui est destinée à faciliter l'écoulement du fluide sur ses parois latérales.

En outre, le bord 54a du canal de communication 56 constitué par la barre horizontale a une dimension longitudinale correspondant à son épaisseur qui est comprise entre 0,1 d et 4 d et est par exemple égale à 0,8 d.
Il convient également de réduire la dimension transversale de l'élément longitudinal 54 en aval de son extrémité amont 54a afin de limiter les pertes de charge.
La dimension de l'élément longitudinal dans le sens d'écoulement du fluide est comprise entre 0,5 et 8,2 d et est par exemple égale à 3,2d. En ménageant ainsi un canal de communication 56 entre les deux zones 38a et 38b de l'espace libre 38 de la chambre d'oscillation 18, l'écoulement de fluide provenant de l'un des passages, par exemple C1, crée au droit dudit canal de communication 56 une variation de pression qui provoque dans l'autre zone 38b une augmentation de pression plus modérée que celle créée en l'absence d'élément longitudinal 54.

Cette augmentation de pression modérée se propage dans l'autre passage C2 vers l'amont en direction des tourbillons logés dans la cavité secondaire 52 la plus proche du passage d'écoulement C2, permettant ainsi au jet de fluide de basculer de l'autre côté sans trop perturber l'oscillation naturelle des tourbillons.
L'invention permet ainsi de diminuer le couplage entre les deux passages d'écoulement C1, C2 et donc de réduire l'interaction entre l'amont et l'aval de l'oscillateur fluidique 1, cette interaction étant plus importante aux débits de fluide élevés.

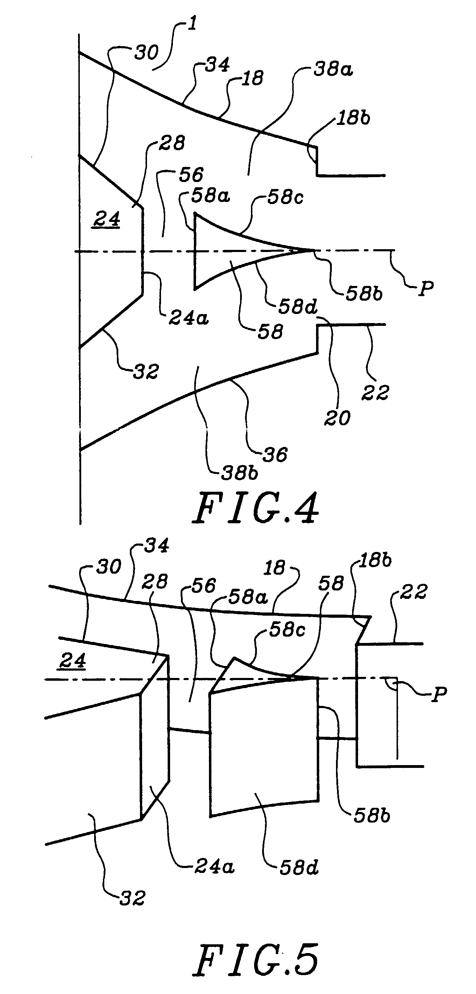

Selon une variante de l'invention telle que représentée aux Figures 4 et 5, l'élément longitudinal 58 a une forme présentant des faces latérales 58c et 58d qui s'étendent à partir de l'extrémité amont 58a jusqu'à l'extrémité aval 58b. Chacune de ces faces latérales 58c et 58d forment avec le plan de symétrie P un angle identique et continûment décroissant.
Comme on le voit sur la Figure 4, les faces latérales 58c et 58d vues en coupe dans le plan d'oscillation du jet ont une forme concave.

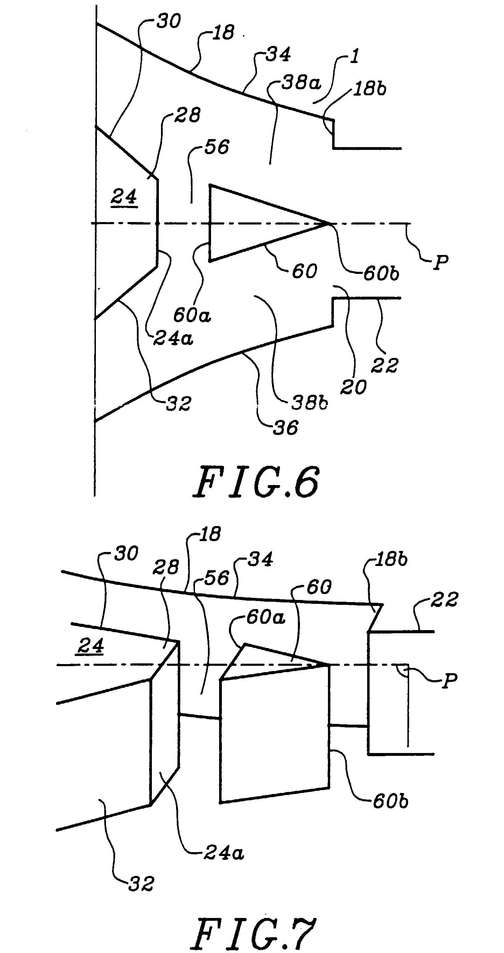

Selon une autre variante de l'invention telle que représentée aux Figures 6 et 7, l'élément longitudinal 60 vu en coupe dans le plan d'oscillation du jet à la Figure 6 a une forme triangulaire qui est couchée par rapport à la direction d'écoulement du fluide et dont la pointe 60b constitue l'extrémité aval dudit élément longitudinal.

Pour les variantes précédemment décrites, la largeur, la profondeur du canal de communication 56 ainsi que la distance entre l'ouverture d'entrée de fluide et le plan transversal médian sont les mêmes. L'élément longitudinal 54, 58, 60 selon l'invention conserve la même forme dans tout plan parallèle au plan d'oscillation du jet de fluide.

Dans un second mode de réalisation de l'invention représenté à la Figure 8, pour lequel seule la partie arrière de l'oscillateur fluidique est représentée, la partie frontale étant identique à celle représentée sur la Figure 2, l'élément longitudinal forme une cloison 62 qui s'étend depuis son extrémité amont 62a qui est confondue avec l'extrémité 24a de la partie arrière 28 de l'obstacle 24 jusqu'à son extrémité aval 62b.

Le canal de communication 64 est aménagé dans cette cloison 62 et peut revêtir différentes formes.
Ainsi sur la Figure 8, le canal de communication 64 a une section de passage de forme sensiblement rectangulaire qui est orientée perpendiculairement à la direction d'écoulement du fluide.

Selon une variante de l'invention représentée à la figure 9, le canal de communication 66 a une section de passage de forme sensiblement elliptique qui est orientée perpendiculairement à la direction d'écoulement du fluide.

Selon une autre variante de l'invention représentée à la figure 10, le canal de communication 68 a une section de passage de forme oblongue orientée perpendiculairement à la direction d'écoulement du fluide.

Le canal de communication doit avoir une section de passage qui ne varie pas trop dans les différents plans parallèles au plan d'oscillation du jet de fluide afin de ne pas perturber le fonctionnement de l'oscillateur fluidique et donc la mesure du débit de fluide.
Le canal de communication 64, 66, 68 tel que représenté aux Figures 8 à 10 a une dimension longitudinale, sa largeur, comprise entre 0,5 d et 5 d, par exemple égale à 1,8 d , et une dimension transversale sa profondeur, comprise entre 0,5 et 5 d et par exemple égale à 2,4 d.
La distance entre l'ouverture d'entrée de fluide 16 et le plan transversal médian du canal de communication 64, 66, 68 est comprise entre 7,5 d et 15 d et par exemple égale à 12,1 d.
Avantageusement, la partie de la cloison 62 qui est située en aval du canal de communication peut avoir une forme profilée non représentée qui est destinée à faciliter l'écoulement du fluide sur les parois latérales de ladite cloison et une dimension transversale assez mince afin de limiter les pertes de charge du fluide.

Les caractéristiques et avantages mentionnés dans la description du premier mode de réalisation de l'invention s'appliquent également au second mode de réalisation précédemment décrit.
La Figure 13 représente les variations relatives du facteur K en fonction du nombre de Reynolds pour un oscillateur fluidique selon l'invention, représenté en trait plein, et pour un oscillateur fluidique selon l'art antérieur, représenté par un trait pointillé.

Il apparaît que la courbe de calibration de l'oscillateur fluidique selon l'invention reste inscrite dans la plage correspondant aux variations relatives du facteur K inférieures à± 1,5% ce qui traduit la linéarité d'un tel oscillateur fluidique par rapport à un oscillateur fluidique de l'art antérieur dont la courbe de calibration affiche des variations relatives du facteur K supérieures à ± 1,5%.
La fréquence d'oscillation d'un tel oscillateur fluidique selon l'invention peut donc être augmentée en régime turbulent.

L'oscillateur fluidique de la Figure 2 permet la mesure du débit du fluide qui le traverse grâce aux deux prises de pression 70 et 72 situées aux points extrêmes de balayage du jet fluide à l'intérieur de la cavité principale 40. Ces prises de pression sont reliées à des dispositifs connus qui permettent de mesurer la fréquence d'oscillation du jet. Grâce à un étalonnage préalable, cette fréquence est reliée au débit. Un compteur de gaz commercial équipé de l'oscillateur fluidique de la Figure 2 est particulièrement avantageux puisqu'il a un comportement linéaire sur une plage de mesure étendue. En effet, d'une part, il dispose de moyens aptes à rendre l'extension radiale des tourbillons dépendante du régime d'écoulement ce qui améliore sa linéarité aux régimes laminaire et de transition et, d'autre part, il est pourvu de moyens pour limiter l'influence de l'écoulement aval du fluide sur l'oscillation des tourbillons ce qui améliore particulièrement sa linéarité en régime turbulent.

L'invention s'applique également à un oscillateur fluidique dans lequel l'obstacle n'est pas pourvu de cavités secondaires.

## Revendications

1. Oscillateur fluidique symétrique par rapport à un plan de symétrie longitudinal (P), comprenant
- une entrée de fluide (E) comportant une ouverture d'entrée (16) de largeur d, apte à former un jet de fluide bidimensionnel oscillant transversalement par rapport audit plan (P),
- une chambre d'oscillation (18) raccordée, par une de ses extrémités (18a), à l'ouverture d'entrée de fluide (16) et, par l'extrémité opposée (18b), à une ouverture de sortie de fluide (20),
- un obstacle (24) disposé dans ladite chambre d'oscillation et formant avec les parois de celle-ci des passages (C1,C2) pour l'écoulement du fluide vers l'aval de l'oscillateur fluidique, des tourbillons se développant de part et d'autre du jet, alternativement en relation avec l'oscillation dudit jet, ledit obstacle présentant une partie frontale (26) et une partie arrière (28) disposée en regard de l'ouverture de sortie du fluide (20) et définissant avec ladite ouverture un espace libre (38) dans lequel débouchent lesdits passages (C1, C2),
- des moyens pour limiter l'influence de l'écoulement aval du fluide sur l'oscillation du jet, caractérisé en ce que l'obstacle (24) occupe la majeure partie de la chambre d'oscillation, une cavité (40) étant pratiquée dans la partie frontale (26) dudit obstacle et étant balayée par le jet en oscillation, lesdits moyens comprenant un élément de forme longitudinale (54, 58, 60, 62) disposé en aval de la partie arrière (28) de l'obstacle afin de diminuer le couplage entre les passages (C1, C2).

2. Oscillateur fluidique selon la revendication 1, caractérisé en ce que les ouvertures d'entrée (16) et de sortie (20) de fluide sont alignées suivant le plan de symétrie longitudinal (P) et en ce que l'élément (54, 58, 60, 62) de forme longitudinale est disposé dans l'alignement des ouvertures (16, 20) et au moins partiellement dans l'espace libre (38) de manière à séparer partiellement celui-ci en deux zones (38a, 38b) identiques, en ménageant entre lesdites zones au moins un canal de communication (56, 64, 66, 68) pour le fluide, ledit canal de communication ayant une section de passage médiane contenue dans le plan de symétrie longitudinal (P).

3. Oscillateur fluidique selon la revendication 2, caractérisé en ce que l'élément longitudinal (54, 58, 60, 62) présente une extrémité dite amont (54a, 58a, 60a, 62a) et une autre extrémité opposée dite aval (54b, 58b, 60b, 62b) qui est située à une distance de l'ouverture d'entrée de fluide (16) comprise entre 8,5 d et 16,2 d.

4. Oscillateur fluidique selon les revendications 2 et 3 caractérisé en ce que la partie arrière de l'obstacle (24) possède une extrémité (24a) et en ce que le canal de communication (56) est ménagé entre l'extrémité (24a) de la partie arrière (28) de l'obstacle (24) et l'extrémité amont (54a, 58a, 60a) de l'élément longitudinal (54, 58, 60), ces extrémités constituant les bords dudit canal de communication.

5. Oscillateur fluidique selon la revendication 4, caractérisé en ce que l'élément longitudinal (54) a une forme générale en T dont la barre horizontale constitue un des bords (54a) du canal de communication (56).

6. Oscillateur fluidique selon la revendication 4, caractérisé en ce que l'élément longitudinal (58) a une forme présentant des faces latérales (58c, 58d) qui s'étendent à partir de l'extrémité amont (58a) jusqu'à l'extrémité aval (58b) en formant chacune avec le plan de symétrie longitudinal (P) un même angle continûment décroissant.

7. Oscillateur fluidique selon la revendication 4, caractérisé en ce que l'élément longitudinal (60) a une forme triangulaire dont la pointe constitue l'extrémité aval (60b).

8. Oscillateur fluidique selon les revendications 2 et 3, caractérisé en ce que l'élément longitudinal forme une cloison (62) qui s'étend depuis son extrémité amont (62a), confondue avec l'extrémité (24a) de la partie arrière (28) de l'obstacle (24), jusqu'à son extrémité aval (62b), le canal de communication (64, 66, 68) étant aménagé dans ladite cloison (62).

9. Oscillateur fluidique selon la revendication 4 ou 8, caractérisé en ce que le canal de communication (56, 64) a une section de passage de forme sensiblement rectangulaire orientée perpendiculairement à la direction d'écoulement du fluide.

10. Oscillateur fluidique selon la revendication 8, caractérisé en ce que le canal de communication (66) a une section de passage de forme sensiblement elliptique orientée perpendiculairement à la direction d'écoulement du fluide.

11. Oscillateur fluidique selon la revendication 8, caractérisé en ce que le canal de communication (68) a une section de forme oblongue orientée perpendiculairement à la direction d'écoulement du fluide.

12. Oscillateur fluidique selon l'une des revendications 2 à 11, caractérisé en ce que le canal de communication (56, 64, 66, 68) a une dimension longitudinale correspondant à sa largeur qui est comprise entre 0,5 d et 5 d.

13. Oscillateur fluidique selon l'une des revendications 2 à 11, caractérisé en ce que la distance entre l'ouverture d'entrée de fluide (16) et le plan transversal médian du canal de communication (56, 64, 66, 68) est comprise entre 7,5 d et 15 d.

14. Oscillateur fluidique selon l'une des revendications 2 à 11, caractérisé en ce que le canal de communication (56, 64, 66, 68) a une dimension transversale qui est comprise entre 0,5 d et 5 d.

15. Compteur de fluide en écoulement, caractérisé en ce qu'il comprend un oscillateur fluidique selon l'une des revendications 1 à 14.

## Patentansprüche

1. Fluidikoszillator, der in bezug auf eine longitudinale Symmetrieebene (P) symmetrisch ist, mit
- einem Fluideingang (E), der eine Eingangsöffnung (16) mit der Breite (d) besitzt, die einen zweidimensionalen Fluidstrahl bilden kann, der quer zu der Ebene (P) oszillieren kann,
- einer Oszillationskammer (18), die mit einem ihrer Enden (18a) mit der Fluideingangsöffnung (16) und mit ihrem gegenüberliegenden Ende (18b) mit einer Fluidausgangsöffnung (20) verbunden ist,
- einem Hindernis (24), das in der Oszillationskammer angeordnet ist und mit deren Wänden Durchlässe (C1, C2) bildet, durch die das Fluid zur Ausgangsseite des Fluidikoszillators strömen kann, wobei beiderseits des Strahls und abwechselnd im Zusammenhang mit der Oszillation des Strahls Wirbel entstehen, wobei das Hindernis einen vorderen Teil (26) und einen hinteren Teil (28) aufweist, der gegenüber der Fluidausgangsöffnung (20) angeordnet ist und mit dieser Öffnung einen freien Raum (38) definiert, in den die Durchlässe (C1, C2) münden,
- Mitteln, die den Einfluß der ausgangsseitigen Strömung des Fluids auf die Oszillation des Strahls begrenzen, dadurch gekennzeichnet, daß das Hindernis (24) den größeren Teil der Oszillationskammer einnimmt, wobei in dem vorderen Teil (26) des Hindernisses ein Hohlraum (40) ausgebildet ist, der von dem oszillierenden Strahl bestrichen wird, wobei die Mittel ein Element (54, 58, 60, 62) mit länglicher Form aufweisen, das hinter dem hinteren Teil (28) des Hindernisses angeordnet ist, um die Kopplung zwischen den Durchlässen (C1, C2) zu verringern.

2. Fluidikoszillator nach Anspruch 1, dadurch gekennzeichnet, daß die Fluideingangsöffnung (16) und die Fluidausgangsöffnung (20) auf die longitudinale Symmetrieebene (P) ausgerichtet sind und daß das Element (54, 58, 60, 62) mit länglicher Form in der Flucht der Öffnungen (16, 20) und wenigstens teilweise in dem freien Raum (38) angeordnet ist, um diesen somit teilweise in zwei völlig gleiche Zonen (38a, 38b) zu trennen, wobei zwischen den Zonen wenigstens ein Verbindungskanal (56, 64, 66, 68) für das Fluid ausgebildet ist, der einen mittleren Durchlaßquerschnitt besitzt, der in der longitudinalen Symmetrieebene (P) liegt.

3. Fluidikoszillator nach Anspruch 2, dadurch gekennzeichnet, daß das längliche Element (54, 58, 60, 62) ein sogenanntes eingangsseitiges Ende (54a, 58a, 60a, 62a) und ein weiteres, gegenüberliegendes sogenanntes ausgangsseitiges Ende (54b, 58b, 60b, 62b) aufweist, das sich in einem Abstand von der Fluideingangsöffnung (16) befindet, der im Bereich zwischen 8,5d und 16,2d liegt.

4. Fluidikoszillator nach den Ansprüchen 2 und 3, dadurch gekennzeichnet, daß der hintere Teil des Hindernisses (24) ein Ende (24a) besitzt und daß der Verbindungskanal (56) zwischen dem Ende (24a) des hinteren Teils (28) des Hindernisses (24) und dem eingangsseitigen Ende (54a, 58a, 60a) des länglichen Elements (54, 58, 60) ausgebildet ist, wobei diese Enden die Ränder des Verbindungskanals bilden.

5. Fluidikoszillator nach Anspruch 4, dadurch gekennzeichnet, daß das längliche Element (54) eine allgemeine T-Form besitzt, deren horizontaler Balken einen der Ränder (54a) des Verbindungskanals (56) bildet.

6. Fluidikoszillator nach Anspruch 4, dadurch gekennzeichnet, daß das längliche Element (58) eine Form besitzt, die seitliche Flächen (58c, 58d) aufweist, die sich vom eingangsseitigen Ende (58a) bis zum ausgangsseitigen Ende (58b) erstrecken und mit der longitudinalen Symmetrieebene (P) jeweils den gleichen kontinuierlich abnehmenden Winkel bilden.

7. Fluidikoszillator nach Anspruch 4, dadurch gekennzeichnet, daß das längliche Element (60) eine dreieckige Form besitzt, deren Spitze das ausgangsseitige Ende (60b) bildet.

8. Fluidikoszillator nach den Ansprüchen 2 und 3, dadurch gekennzeichnet, daß das längliche Element eine Trennwand (62) bildet, die sich von seinem eingangsseitigen Ende (62a), das mit dem Ende (24a) des hinteren Teils (28) des Hindernisses (24) zusammenfällt, bis zu seinem ausgangsseitigen Ende (62b) erstreckt, wobei der Verbindungskanal (64, 66, 68) in der Trennwand (62) ausgebildet ist.

9. Fluidikoszillator nach Anspruch 4 oder 8, dadurch gekennzeichnet, daß der Verbindungskanal (56, 64) einen Durchlaßquerschnitt mit im wesentlichen rechtwinkliger Form besitzt, der senkrecht zur Strömungsrichtung des Fluids orientiert ist.

10. Fluidikoszillator nach Anspruch 8, dadurch gekennzeichnet, daß der Verbindungskanal (66) einen Durchlaßquerschnitt mit im wesentlichen elliptischer Form besitzt, der senkrecht zur Strömungsrichtung des Fluids orientiert ist.

11. Fluidikoszillator nach Anspruch 8, dadurch gekennzeichnet, daß der Verbindungskanal (68) einen Querschnitt mit länglicher Form besitzt, der senkrecht zur Strömungsrichtung des Fluids orientiert ist.

12. Fluidikoszillator nach einem der Ansprüche 2 bis 11, dadurch gekennzeichnet, daß der Verbindungskanal (56, 64, 66, 68) eine longitudinale Abmessung besitzt, die seiner Breite entspricht, die im Bereich zwischen 0,5d und 5d liegt.

13. Fluidikoszillator nach einem der Ansprüche 2 bis 11, dadurch gekennzeichnet, daß der Abstand zwischen der Fluideingangsöffnung (16) und der transversalen Mittelebene des Verbindungskanals (56, 64, 66, 68) im Bereich zwischen 7,5d und 15d liegt.

14. Fluidikoszillator nach einem der Ansprüche 2 bis 11, dadurch gekennzeichnet, daß der Verbindungskanal (56, 64, 66, 68) eine transversale Abmessung besitzt, die im Bereich zwischen 0,5d bis 5d liegt.

15. Strömungsfluidzähler, dadurch gekennzeichnet, daß er einen Fluidikoszillator nach einem der Ansprüche 1 bis 14 enthält.

## Claims

1. A fluidic oscillator that is symmetrical about a longitudinal plane of symmetry (P), comprising:
a fluid inlet (E) having an inlet opening (16) of width d suitable for forming a two-dimensional fluid jet oscillating transversely relative to said longitudinal plane of symmetry (P),
an oscillation chamber (18) connected via one of its ends (18a) to the fluid inlet opening (16) and via its opposite end (18b) to a fluid outlet opening (20),
an obstacle (24) disposed in said oscillation chamber and co-operating with the walls thereof to form passages (C1, C2) to allow the fluid to flow towards the downstream end of the fluidic oscillator, eddies being formed on either side of the jet alternatively in relation with the oscillation of the jet, said obstacle having a front portion (26), and a rear portion (28) disposed facing the fluid outlet opening (20) and co-operating with said fluid outlet opening to define an empty space (38) into which said passages (C1, C2) open out,
means for limiting the influence of the downstream flow of fluid on the oscillation of the jet,
characterized in that the obstacle (24) occupies the major portion of the oscillation chamber, a cavity (40) being formed in the front portion (26) of said obstacle and being swept over by the oscillating jet, said means comprising a longitudinal-shaped element (54, 58, 60, 62) disposed downstream of the rear portion (28) of the obstacle in order to reduce the coupling between the passages (C1, C2).

2. A fluidic oscillator according to claim 1,
characterised in that the fluid inlet (16) and outlet openings (20) are in alignment on the longitudinal plane of symmetry (P) and in that the longitudinal-shaped element (54, 58, 60, 62) is disposed in line with the openings (16, 20) and at least in part in the empty space in such a manner as to partially subdivide it into two identical zones (38a, 38b), forming between said zones at least one communication channel (56, 64, 66, 68) for the fluid, said communication channel having a middle flow section lying in the longitudinal plane of symmetry (P).

3. A fluidic oscillator according to claim 2,
characterized in that the longitudinal element (54, 58, 60, 62) has an "upstream" end (54a, 58a, 60a, 62a) and an opposite "downstream" end (54b, 58b, 60b, 62b) situated at a distance from the fluid, inlet opening (16) lying in the range 8.5 d to 16.2 d.

4. A fluidic oscillator according to claims 2 to 3,
characterized in that the rear portion of the obstacle (24) has an end (24a) and in that the communication channel (56) is formed between the end (24a) of the rear portion (28) of the obstacle (24) and the upstream end (54a, 58a, 60a) of the longitudinal element (54, 58, 60), said ends constituting the edges of said communication channel.

5. A fluidic oscillator according to claim 4,
characterized in that the longitudinal element (54) is generally T-shaped with the horizontal bar of the T constituting one of the edges (54a) of the communication channel.

6. A fluidic oscillator according to claim 4,
characterized in that the longitudinal element (58) is of a shape having lateral faces (58c, 58d) extending from the upstream end (58a) to the downstream (58b) end, each forming the same continuously decreasing angle with the longitudinal plane of symmetry (P).

7. A fluidic oscillator according to claim 4,
characterized in that the longitudinal element (60) is triangular in shape with the tip of the triangle constituting the downstream end (60b).

8. A fluidic oscillator according to claims 2 and 3,
characterized in that the longitudinal element forms a partition (62) extending from its upstream end (62a) which coincides with the end (24a) of the rear portion (28) of the obstacle (24) to its own downstream end (62b), the communication channel (64, 66, 68) being formed through said partition (62).

9. A fluidic oscillator according to claim 4 or 8,
characterized in that the communication channel (56, 64) has a flow section that is substantially rectangular in shape extending perpendicularly to the flow direction of the fluid.

10. A fluidic oscillator according to claim 8,
characterized in that the communication channel (66) has a flow section that is substantially elliptical in shape, extending perpendicularly to the flow direction of the fluid.

11. A fluidic oscillator according to claim 8,
characterized in that the communication channel (68) has a flow section that is substantially oblong in shape, extending perpendicularly to the flow direction of the fluid.

12. A fluidic oscillator according to any one of claims 2 to 11, characterized in that the communication channel (56, 64, 66, 68) has a longitudinal dimension corresponding to its width and lying in the range 0.5 d to 5 d.

13. A fluidic oscillator according to any one of claims 2 to 11, characterized in that the distance between the fluid inlet opening (16) and the middle transverse plane of the communication channel (56, 64, 66, 68) lies in the range 7.5 d to 15 d.

14. A fluidic oscillator according to any one of claims 2 to 11, characterized in that the communication channel (56, 64, 66, 68) has a transverse dimension lying in the range 0.5 d to 5 d.

15. A fluid flow meter characterized in that it includes a fluidic oscillator according to any one of claims 1 to 14.
